# EUROPÄISCHE PATENTSCHRIFT

(11) **EP 4 126 564 B1**
(45) Veröffentlichungstag und Bekanntmachung des Hinweises auf die Patenterteilung: **07.05.2025**
(21) Anmeldenummer: 21716592.7
(22) Anmeldetag: 17.03.2021
(51) Int. Cl.: B60C 9/20, B60C 9/00, D07B 1/06

(54) **FAHRZEUGLUFTREIFEN IN RADIALBAUART FÜR NUTZFAHRZEUGREIFEN**
PNEUMATIC VEHICLE TIRE OF RADIAL DESIGN FOR UTILITY VEHICLE TIRES
PNEU DE VÉHICULE PNEUMATIQUE DE CONCEPTION RADIALE POUR PNEUS DE VÉHICULES UTILITAIRES

(30) Priorität: 03.04.2020 DE 102020204344
(43) Veröffentlichungstag der Anmeldung: 08.02.2023
(73) Patentinhaber: Continental Reifen Deutschland GmbH, 30175 Hannover (DE)
(72) Erfinder: BERGER, Florian, 30165 Hannover (DE); MOURA, Tiago, 30165 Hannover (DE); WACHMANN, Fabian, 30165 Hannover (DE)
(74) Vertreter: Continental Corporation
(86) Internationale Anmeldenummer: PCT/DE2021/200035
(87) Internationale Veröffentlichungsnummer: WO 2021/197552

(56) Entgegenhaltungen:
- EP-A2- 0 342 644
- WO-A2-2015/014639
- JP-A- 2010 018 942
- US-A1- 2014 083 590

## Beschreibung

Die Erfindung betrifft einen Fahrzeugluftreifen in Radialbauart für Nutzfahrzeuge, insbesondere Lastkraftwagen, Busse und Lastkraftwagenanhänger mit einem Gürtel, welcher drei oder mehr Gürtellagen mit Stahlkorden aufweist, wobei jeder Stahlkord wenigstens zwei Stränge und wobei jeder Stang wenigstens zwei Stahlfilamente aufweist, wobei zumindest in einer der Gürtellagen Stahlkorde der Konstruktion 2 bis 4 x N mit N = 2 bis 5 angeordnet sind, wobei diese Konstruktion bedeutet, dass dieser Stahlkord 2 bis 4 miteinander verdrehte Stränge aufweist, wobei jeder Strang 2 bis 5 Stahlfilamente enthält, welche derart miteinander verdreht sind, dass diese 2 bis 5 Stahlfilamente ohne Kernfilament angeordnet sind.

Ein derartiger Fahrzeugluftreifen für Nutzfahrzeuge ist beispielsweise aus der WO 2015/014639 A2 bekannt. Dieser Fahrzeugluftreifen weist gemäß einem Ausführungsbeispiel einen Gürtel mit drei Gürtellagen mit Stahlkorden auf, nämlich eine erste Gürtellage (Sperrlage), eine zweite Gürtellage (Arbeitslage) und eine dritte Gürtellage (Schutz- bzw. Abdecklage). In der dritten Gürtellage sind insbesondere Stahlkorde der Konstruktion 3 x 4 x 0,24 mm vorgesehen. Bei der Vulkanisation soll das Gummimaterial der Gürtellage gut in die Zwischenräume ein solchen Kords einfließen.

Aus der US 2014/0083590 A1 ist ein Fahrzeugluftreifen für Nutzfahrzeuge bekannt, welcher einen Gürtel aufweist, zu dessen Gürtellagen zwei Gürtellagen mit Stahlkorden mit einem Durchmesser von höchstens 1,3 mm gehören, wobei die Stahlfilamente der Stahlkorde einen Durchmesser von höchstens 0,30 mm aufweisen. Bei einem Ausführungsbeispiel weist der Gürtel vier Gürtellagen auf, wobei anstelle der dritten Gürtellage randseitige Verstärkungsstreifen vorgesehen sein können. Die dritte Gürtellage weist einen Stahlkord mit einem Durchmesser von 0,80 mm bis 1,30 mm sowie aus drei miteinander verdrehten Strängen auf, wobei jeder Strang aus vier miteinander verdrehten Stahlfilamenten mit einen Durchmesser von 0,12 mm bis 0,22 mm, vorzugsweise von 0,14 mm bis 0,175 mm, gebildet ist. Ein Kernfilament ist nicht vorgesehen. Der Gürtel soll beim Abrollen des Reifens die auf die Karkasse übertragenen Kräfte begrenzen und eine gute Haltbarkeit aufweisen.

Aus der EP 0 342 644 A2 ist ein weiterer Nutzfahrzeugreifen mit einem vierlagigen Gürtel bekannt. In der radial äußersten Gürtellage befindet sich ein Stahlkord mit einem einzigen Strang, wobei der Stahlkord beispielsweise die Konstruktion 1 x 5 x 0,38 aufweist. Ferner ist als Stand der Technik ein Stahlkord der Konstruktion 4 x 4 x 0,23 erwähnt, bei welchem der Zusammenhalt der Stränge als nicht optimal angegeben ist. Der vorgeschlagene Stahlkord mit einem einzigen Strang soll in dieser Hinsicht verbessert sein.

Die JP 2010 018 942 A offenbart einen Nutzfahrzeugreifen mit einem Gürtel mit vier Gürtellagen mit Stahlkorden aus Stahlfilamenten mit einem Filamentdurchmesser von 0,13 mm bis 0,23 mm, wobei die dritte Gürtellage eine 0°-Gürtellage ist. Die Stahlkorde weisen insbesondere die Konstruktion 3 + 9 + 15 x 0,23, 1 x 5 x 0,38 oder 4 x 4 x 0,23 auf. Ferner ist für die 0°-Gürtellage ein Stahlkord der Konstruktion m x n mit m = 2 bis 5 und n = 2 bis 4 erwähnt. Solche Stahlkorde sollen die Haltbarkeit der Gürtellagen verbessern.

Gürtelkonstruktionen von Nutzfahrzeugreifen sind dem Fachmann hinreichend bekannt. Übliche Gürtelkonstruktionen von Nutzfahrzeugreifen weisen üblicherweise vier Lagen auf, welche aus in Gummimischungen eingebetteten Stahlkorden bestehen. Die radial innerste Lage wird bei einem 4-Lagen-Gürtel als "1.Gürtellage" oder nach ihrer Funktion als "Sperrlage" bezeichnet. Radial außen auf dieser sind die 2. Gürtellage und die 3. Gürtellage in Funktion von sogenannten "Arbeitslagen" angeordnet. Die radial äußere Arbeitslage wird von der 4. Gürtellage, der sogenannten "Abdecklage" oder "Schutzlage", abgedeckt.

Es ist ebenfalls bekannt, eine weitere Gürtellage vorzusehen, welche eine sogenannte "0°-Lage" ist, deren Festigkeitsträger etwa in Umfangsrichtung des Reifens (+/- 5° in Bezug auf die Umfangsrichtung) verlaufen und welche üblicherweise entweder zwischen den Arbeitslagen oder radial innerhalb der Arbeitslagen angeordnet ist.

Die Stahlkorde der 1.Gürtellage weisen in der Regel einen Winkel > 45° in Bezug auf die Umfangsrichtung auf. Die 1. Gürtellage wird aufgrund ihrer Funktion: Sperrung der Beweglichkeit der Arbeitslagen in Umfangsrichtung, als sogenannte "Sperrlage" bezeichnet. Die Stahlkorde der beiden Arbeitslagen weisen typischerweise einen gleichen Winkel zwischen 15° und 35° in Bezug auf die Reifenumfangsrichtung auf, wobei die Stahlkorde der einen Arbeitslage gegenläufig zu den Stahlkorden der anderen Arbeitslage in Bezug auf die Reifenumfangsrichtung geneigt sind. So sind die Stahlkorde der einen Arbeitslage kreuzend zu den Stahlkorden der anderen Arbeitslage angeordnet. Die Arbeitslagen übernehmen hohe Scher- und Zugkräfte, tragen die Hauptlast im Gürtel und sind daher für die Gürtelhaltbarkeit von besonderer Bedeutung.

Die 4. Gürtellage hat die Funktion einer Schutzlage für die beiden darunter liegenden Arbeitslagen, indem sie eine Barriere für Steine oder andere Gegenstände darstellt, die durch das Laufstreifenpaket dringen könnten. Die Festigkeitsträger weisen üblicherweise einen Winkel zwischen 15° und 25° in Bezug auf die Reifenumfangsrichtung auf. Ohne die Schutzlage würden die Korde der Arbeitslagen durch häufig durchdringende Steine verletzt werden und verstärkt der Korrosion ausgesetzt sein, was am Ende die Traglast, die Haltbarkeit und die Runderneuerungsfähigkeit des Reifens deutlich reduzieren würde.

Stahlkorde für Verstärkungslagen von Fahrzeugreifen sind dem Fachmann ebenfalls hinreichend bekannt. Ein Stahlkord zeichnet sich im Allgemeinen dadurch aus, dass dieser wenigstens zwei Stahlfilamente aufweist, welche miteinander verdreht sind.

Bisher werden Stahlkorde beispielsweise der Konstruktion 3 x 7 x 0,22mm in der 0°-Lage eingesetzt. Bei dieser Konstruktion sind drei Stränge mit je 7 Stahlfilamenten des Durchmessers 0,22 mm miteinander zu einem Stahlkord verdreht. Die 7 Stahlfilamente sind derart in jedem Strang angeordnet, dass 6 Lagenfilamente um 1 Kernfilament herum verdreht sind.

Ein solcher Kord ist besonders kompakt und stabil und wird heutzutage beispielsweise in einer 0°-Lage oder der Schutzlage eines NFZ-Reifens eingesetzt. Die Filamente eines Stranges sind derart dicht zueinander angeordnet, so dass dieser als "geschlossen" bezeichnet wird und beim Einbetten der Stahlkorde in die Gummimischung kein Gummi zwischen die Filamente des Kordes penetrieren kann. Für den im Betrieb befindlichen NFZ-Reifen, bei dem die Festigkeitsträger in einer 0°-Lage etwa in Umfangsrichtung angeordnet sind, ist diese Kompaktheit und nur bei großen Kraftaufwand erreichbare gewisse Dehnung vorteilhaft, um im Fahrbetrieb die Reifenkontur gegen die Fliehkräfte zu erhalten. Jedoch ist diese beim Reifenbau, bei dem der Rohreifen in die Vulkanisierform erhoben werden muss und hierfür eine Dehnung um etwa 2% erforderlich ist, nachteilig. Zudem kann der vorgenannte Kord, insbesondere wenn dieser in der schnitt- und verletzungsanfälligen Schutzlage eingesetzt ist, anfällig für Korrosion sein. Denn das Gummi ist nicht in den Strang penetriert, wodurch zwischen den Filamenten ein Leitweg für Feuchtigkeit gebildet ist. Zudem neigt ein Strang mit Kern- und Lagenfilamenten zu sogenannten Fretting-Effekten, wodurch die Haltbarkeit herabgesetzt sein kann.

"Frettingeffekte" sind Scheuereffekte, welche lokal an Kontaktpunkten-/flächen von zwei benachbarten Filamenten und/oder von benachbarten Strängen auftreten und die Haltbarkeit des Festigkeitsträgers nachteilig beeinflussen können.

Der Erfindung liegt somit die Aufgabe zugrunde, einen Fahrzeugluftreifen in Radialbauart für Nutzfahrzeuge mit einem Gürtel der eingangs genannten Art derart auszuführen, dass dieser während des Reifenbaus als Rohreifen gut in die Vulkanisierform erhoben werden kann und welcher als fertig vulkanisierter Reifen in seiner Haltbarkeit verbessert ist.

Gelöst wird die gestellte Aufgabe erfindungsgemäß dadurch, dass dieser Stahlkord die Konstruktion 3 x 4 x 0,29 aufweist.

Erfindungswesentlich ist, dass jeder Strang dieses Stahlkordes 2 bis 5 Filamente aufweist, die jedoch derart verdreht sind, dass KEIN Kernfilament vorhanden ist. Hierdurch ist eine sogenannte offene Kordkonstruktion geschaffen, in welche Gummi eindringen kann. Dieses zwischen die Filamente des Stranges eingedrungene Gummi verhindert einen Transport von Feuchtigkeit innerhalb des Stranges, wodurch Korrosion weitestgehend vermieden ist. Die Haltbarkeit der Gürtellage und somit des Fahrzeugluftreifens ist verbessert. Zudem erlaubt die offene Konstruktion eine Dehnung des Kordes von den erforderlichen etwa 2% für die Erhebung des Rohreifens im Reifenbau. Anschließend ist ein erwünschter hoher Kraftaufwand für die weitere Dehnung des Kordes erforderlich. Ebenfalls sind Frettingeffekte aufgrund des zwischen die Filamente penetrierten Gummis vermindert, wodurch die Haltbarkeit der Gürtellage und somit des Fahrzeugluftreifens ebenfalls verbessert ist.

Vorteilhaft ist es, wenn die Dehnung bei 100 N des ungummierten Stahlkordes 1% bis 4%, vorzugsweise 2% bis 3% beträgt, wobei die vorgenannte Dehnung dieses ungummierten Stahlkordes gemäß ASTM D 2969 ermittelt wird. Hierdurch ist weiterhin gewährleistet, dass der Reifen im Heizprozess ideal in die Form erhoben werden kann.

In einer Ausführung der Erfindung weist der Fahrzeugluftreifen in Radialbauart für Nutzfahrzeuge einen vierlagigen Gürtel mit zwei Arbeitslagen, einer Sperrlage und einer 0°-Lage auf, wobei diese Stahlkorde der vorbeschriebenen Ausführungen in der 0°-Lage angeordnet sind.

In einer anderen Ausführung der Erfindung weist der Fahrzeugluftreifen wenigstens vier Gürtellagen auf, von denen zumindest zwei Arbeitslagen und zusätzlich eine Sperrlage und eine Schutzlage und/oder eine 0°-Lage vorgesehen sind und wobei diese Stahlkorde in der 0°-Lage und/oder in der Schutzlage angeordnet sind.

Weitere Merkmale, Vorteile und Einzelheiten der Erfindung werden nun anhand der schematischen Zeichnungen, welche Ausführungsbeispiele darstellen, näher beschrieben. Dabei zeigen die:
Fig. 1 einen Teilquerschnitt eines erfindungsgemäßen Fahrzeugluftreifens für Nutzfahrzeuge im Gürtel- und Laufstreifenbereich;
Fig. 2 einen Querschnitt durch einen Stahlkord, welcher in der Schutzlage und/oder in der 0°-Lage des Fahrzeugluftreifens der Fig. 1 angeordnet ist;
Fig. 3 einen Querschnitt durch einen anderen Stahlkord, welcher in der Schutzlage und/oder in der 0°-Lage des Fahrzeugluftreifens der Fig. 1 angeordnet ist und nicht unter den Schutzbereich des Anspruch 1 fällt.

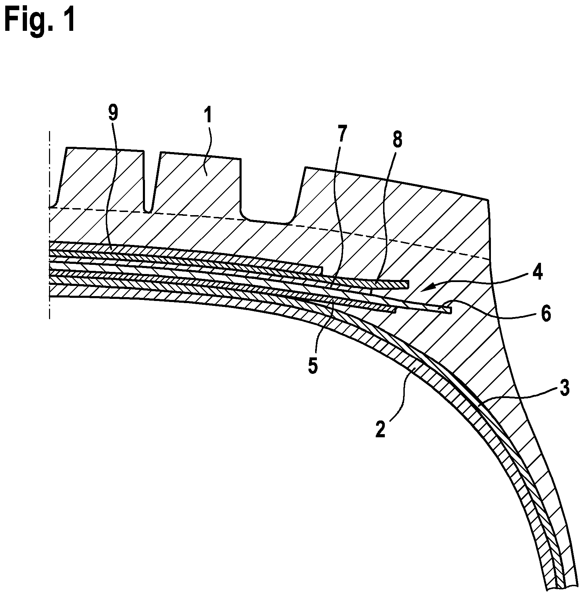

Die Fig. 1 zeigt einen Querschnitt durch den Laufstreifen- und Gürtelbereich eines erfindungsgemäßen Fahrzeugluftreifens für Nutzfahrzeuge, wie beispielsweise Lastkraftwagen, Busse oder Lastkraftwagenanhänger. Von den im gezeigten Bereich des Fahrzeugluftreifens üblicherweise vorhandenen Bauteilen sind ein profilierter Laufstreifen 1, eine Innenschicht 2, eine Karkasseinlage 3 und ein mehrlagiger Gürtel 4 dargestellt. Nicht dargestellt sind die üblicherweise zwischen den Randabschnitten der Gürtellagen, insbesondere im Bereich der Gürtellagenkanten, vorgesehenen Gürtelpolster und dergleichen.

Der Gürtel 4 weist fünf Gürtellagen 5, 6, 7, 8 und 9 auf, wobei die erste Gürtellage die radial innerste Gürtellage 5 und als Sperrlage ausgebildet ist. Die zweite Gürtellage 6 ist eine Arbeitslage, es folgt eine 0°-Lage 7, oberhalb derer die dritte Gürtellage 8 als Arbeitslage angeordnet ist. An die dritte Gürtellage 8 schließt die radial äußerste Gürtellage 9, die Schutzlage, an. Sämtliche Gürtellagen 5, 6, 7, 8 und 9 bestehen aus in eine Gummimischung, der sogenannten Gürtelgummierung, eingebetteten Festigkeitsträgern, welche in jeder Lage parallel zueinander verlaufen.

Die Festigkeitsträger in den Gürtellagen 5, 6, 7, 8 und 9 sind unter bestimmten Winkeln in Bezug auf die Umfangsrichtung geneigt. Die Festigkeitsträger verlaufen, beginnend bei der radial innersten Gürtellage 5, gemäß der Abfolge rechtssteigend - rechtssteigend - 0° - linkssteigend - linkssteigend. Unter einer 0°-Gürtellage 7 ist eine solche zu verstehen, in welcher die Festigkeitsträger zur Umfangsrichtung verlaufen und um höchsten ± 5° von der exakten 0°-Orientierung abweichen. Der Winkel der Festigkeitsträger in der ersten Gürtellage 5 beträgt 45° bis 90°, insbesondere 48° bis 57°, der Winkel der Festigkeitsträger in der 0°-Gürtellage 7 beträgt 0° ± 5°, die Winkel der Festigkeitsträger in der zweiten und dritten Gürtellage (Arbeitslagen) 6, 8 betragen jeweils 10° bis 45° und der Winkel der Festigkeitsträger in der vierten Gürtellage 9 beträgt ebenfalls 10° bis 45°, jeweils in Bezug auf die Umfangsrichtung. Wie bereits erwähnt sind die zweite Gürtellage 6 und die dritte Gürtellage 8 Arbeitslagen, ihre Festigkeitsträger verlaufen daher unter relativ kleinen Winkeln zur Umfangsrichtung und die Steigung der Lagen ist entgegengesetzt.

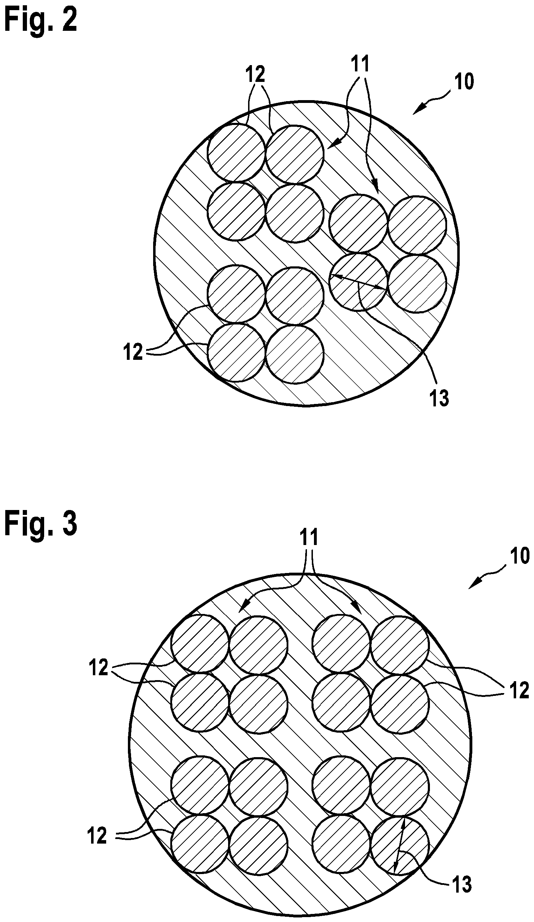

Der Stahlkord 10 der Fig. 2 ist hierbei entweder in der 0°-Gürtellage 7 und/oder in der radial äußerten Gürtellage, der Schutzlage 9, des Nutzfahrzeugreifens der Fig. 1 angeordnet. Die Konstruktion lautet 3 x 4 x 0,29 mm, was bedeutet, dass drei Stränge 11 mit je 4 Stahlfilamenten 12 mit einem Durchmesser 13 von je 0,29 mm zu einem Stahlkord 10 verdreht sind. Die Dehnung bei 100 N des ungummierten Kordes beträgt 1% bis 4%, wobei die vorgenannte Dehnung des ungummierten Kordes gemäß ASTM D 2969 ermittelt wird.

Ein anderer Stahlkord 10 ist in der Fig. 3 gezeigt. Dieser ist ebenfalls entweder in der 0°-Gürtellage 7 und/oder in der radial äußerten Gürtellage, der Schutzlage 9, des Nutzfahrzeugreifens der Fig. 1 angeordnet. Die Konstruktion lautet 4 x 4 x 0,26 mm, was bedeutet, dass vier Stränge 11 mit je 4 Stahlfilamenten 12 mit einem Durchmesser 13 von je 0,26 mm zu einem Stahlkord 10 verdreht sind.

### Bezugszeichenliste

- 1: Laufstreifen
- 2: Innenschicht
- 3: Karkasseinlage
- 4: Gürtel
- 5: erste Gürtellage / Sperrlage
- 6: zweite Gürtellage / Arbeitslage
- 7: 0°-Gürtellage
- 8: dritte Gürtellage / Arbeitslage
- 9: vierte Gürtellage / Schutzlage
- 10: Stahlkord
- 11: Strang
- 12: Stahlfilament
- 13: Durchmesser des Stahlfilamentes

## Patentansprüche

1. Fahrzeugluftreifen in Radialbauart für Nutzfahrzeuge, insbesondere Lastkraftwagen, Busse und Lastkraftwagenanhänger mit einem Gürtel, welcher drei oder mehr Gürtellagen (5, 6, 7, 8, 9) mit Stahlkorden (10) aufweist, wobei jeder Stahlkord (10) wenigstens zwei Stränge (11) und wobei jeder Stang (11) wenigstens zwei Stahlfilamente (12) aufweist,
wobei zumindest in einer der Gürtellagen (5, 6, 7, 8, 9) Stahlkorde (10) der Konstruktion 2 bis 4 x N mit N = 2 bis 5 angeordnet sind, wobei diese Konstruktion bedeutet, dass dieser Stahlkord (10) 2 bis 4 miteinander verdrehte Stränge (11) aufweist, wobei jeder Strang (11) 2 bis 5 Stahlfilamente (12) enthält, welche derart miteinander verdreht sind, dass diese 2 bis 5 Stahlfilamente (12) ohne Kernfilament angeordnet sind,
**dadurch gekennzeichnet,**
**dass** dieser Stahlkord (10) die Konstruktion 3 x 4 x 0,29 aufweist.

2. Fahrzeugluftreifen nach Anspruch 1, **dadurch gekennzeichnet, dass** die Dehnung bei 100 N des ungummierten Stahlkordes 1% bis 4%, vorzugsweise 2% bis 3% beträgt, wobei die vorgenannte Dehnung dieses ungummierten Stahlkordes gemäß ASTM D 2969 ermittelt wird.

3. Fahrzeugluftreifen nach Anspruch 1 oder 2, **dadurch gekennzeichnet, dass** der Fahrzeugluftreifen einen vierlagigen Gürtel (4) mit zwei Arbeitslagen (6, 8), einer Sperrlage (5) und einer 0°-Lage (7) aufweist, wobei diese Stahlkorde in der 0°-Lage (7) angeordnet sind.

4. Fahrzeugluftreifen nach einem oder mehreren der vorangehenden Ansprüche 1 bis 3, **dadurch gekennzeichnet, dass** der Fahrzeugluftreifen wenigstens vier Gürtellagen (5, 6, 7, 8, 9) aufweist, von denen zumindest zwei Arbeitslagen (6, 8) und zusätzlich eine Sperrlage (5) und eine Schutzlage (9) oder eine 0°-Lage (7) vorgesehen sind und dass diese Stahlkorde (10) in der 0°-Lage (7) oder in der Schutzlage (9) angeordnet sind.

## Claims

1. Pneumatic vehicle tyre of radial type of construction for utility vehicles, in particular lorries, buses and lorry trailers, having a belt which has three or more belt plies (5, 6, 7, 8, 9) with steel cords (10), wherein each steel cord (10) has at least two strands (11) and wherein each strand (11) has at least two steel filaments (12),
wherein steel cords (10) of the construction 2 to 4 x N, where N = 2 to 5, are at least arranged in one of the belt plies (5, 6, 7, 8, 9), wherein this construction means that this steel cord (10) has 2 to 4 twisted-together strands (11), wherein each strand (11) comprises 2 to 5 steel filaments (12) which are twisted together such that these 2 to 5 steel filaments (12) are arranged without a core filament,
**characterized**
**in that** this steel cord (10) has the construction 3 x 4 x 0.29.

2. Pneumatic vehicle tyre according to Claim 1, **characterized in that** the elongation at 100 N of the non-rubberized steel cord is 1% to 4%, preferably 2% to 3%, wherein the above-stated elongation of this non-rubberized steel cord is ascertained in accordance with ASTM D 2969.

3. Pneumatic vehicle tyre according to Claim 1 or 2, **characterized in that** the pneumatic vehicle tyre has a four-ply belt (4) with two working plies (6, 8), one barrier ply (5) and one 0° ply (7), wherein these steel cords are arranged in the 0° ply (7).

4. Pneumatic vehicle tyre according to one or more of the preceding Claims 1 to 3, **characterized in that** the pneumatic vehicle tyre has at least four belt plies (5, 6, 7, 8, 9), of which at least two working plies (6, 8) and additionally one barrier ply (5) and one protective ply (9) or one 0° ply (7) are provided, and **in that** these steel cords (10) are arranged in the 0° ply (7) or in the protective ply (9).

## Revendications

1. Pneumatique de véhicule de construction radiale pour véhicules utilitaires, notamment camions, bus et remorques de camions, avec une ceinture qui présente trois couches de ceinture (5, 6, 7, 8, 9) ou plus avec des câbles d'acier (10), chaque câble d'acier (10) présentant au moins deux brins (11) et chaque brin (11) présentant au moins deux filaments d'acier (12),
des câbles d'acier (10) de la construction 2 à 4 x N avec N = 2 à 5 étant agencés au moins dans l'une des couches de ceinture (5, 6, 7, 8, 9), cette construction signifiant que ce câble d'acier (10) présente 2 à 4 brins (11) tordus ensemble, chaque brin (11) contenant 2 à 5 filaments d'acier (12) qui sont tordus ensemble de telle sorte que ces 2 à 5 filaments d'acier (12) sont agencés sans filament central,
**caractérisé**
**en ce que** ce câble d'acier (10) présente la construction 3 x 4 x 0,29.

2. Pneumatique de véhicule selon la revendication 1, **caractérisé en ce que** l'allongement à 100 N du câble d'acier non caoutchouté est de 1 % à 4 %, de préférence de 2 % à 3 %, ledit allongement de ce câble d'acier non caoutchouté étant déterminé selon la norme ASTM D 2969.

3. Pneumatique de véhicule selon la revendication 1 ou 2, **caractérisé en ce que** le pneumatique de véhicule présente une ceinture à quatre couches (4) avec deux couches de travail (6, 8), une couche de blocage (5) et une couche à 0° (7), ces câbles d'acier étant agencés dans la couche à 0° (7).

4. Pneumatique de véhicule selon une ou plusieurs des revendications 1 à 3 précédentes, **caractérisé en ce que** le pneumatique de véhicule présente au moins quatre couches de ceinture (5, 6, 7, 8, 9), dont au moins deux couches de travail (6, 8) et, en outre, une couche de blocage (5) et une couche de protection (9) ou une couche à 0° (7), et **en ce que** ces câbles d'acier (10) sont agencés dans la couche à 0° (7) ou dans la couche de protection (9).
